# EUROPEAN PATENT APPLICATION

(11) **EP 2 838 247 A1**
(43) Date of publication of application: **18.02.2015**
(21) Application number: 14168747.5
(22) Date of filing: 16.05.2014
(51) Int. Cl.: H04M 1/725, H04N 21/41, H04N 21/414, H04M 1/60

(54) **Device, communication terminal, and call method using the same**

(30) Priority: 12.08.2013 KR 20130095539
(71) Applicant: Samsung Electronics Co., Ltd, Gyeonggi-do 443-742 (KR)
(72) Inventor: Koo, Ja-sung, Gyeonggi-do (KR)
(74) Representative: Hewett, Jonathan Michael Richard

(57) **Abstract**

A display device is provided, which includes a display configured to display content, a speaker configured to output sound of the content, a communicator configured to connect communication with a first communication terminal, and a controller configured to display an inquiry message for selecting whether to accept a call on the display if a call destination mode in which the first communication terminal receives a call signal from a second communication terminal begins.

## Description

The present invention relates to a display device, a communication terminal, and a voice call method using the same, and more particularly to a display device that performs voice call or video call through a communication terminal, the communication terminal, and a voice call or a video call method using the same.

Recently, with the development of technology, display devices that can adopt various functions have been released. Users not only can view content through such display devices but also can experience various kinds of content and applications through combination with the Internet or the like. An example of such devices that provide various functions may be a smart TV. Accordingly, time of use of such display devices is gradually increasing.

A user may have a phone call while viewing a display device indoors, such as at home. In this case, the user would need to move to a place where a telephone is installed to pick up the phone, which may inconvenience the user. In the case of a portable phone, the user may not remember the location where the portable phone is put at home, and thus may have difficulty in finding the phone.

Further, if the user has a phone call while viewing content using the display device, the phone call may be disturbed by the content viewing.

Accordingly, there is a need for a technology capable of supporting an effective voice call through coupling between operations of a display device and a communication terminal.

One or more exemplary embodiments of the present invention may address the above needs and to provide the advantages described below, and an aspect of one or more exemplary embodiments is to provide a display device, a communication terminal, and a voice call method using the same, which can enable a user to make a voice call conveniently through their mutual coupling. However, the above needs and below advantages are merely exemplary, and exemplary may be addressed to other needs or provide other advantages.

According to an aspect of one or more exemplary embodiments, a display device includes a display configured to display content; a speaker configured to output sound of the content; a communicator configured to connect communication with a first communication terminal; and a controller configured to display an inquiry message for selecting whether to accept a call on the display if a call destination mode in which the first communication terminal receives a call signal from a second communication terminal begins.

The controller may mute the sound output of the content and connect a phone call with the second communication terminal if a first user command to consent to the call is input according to the inquiry message, and may transmit a call rejection signal to the first communication terminal if a second user command to reject the call is input according to the inquiry message.

The controller may resume the sound output of the content if the phone call with the second communication terminal is ended.

The controller may automatically control a volume level of the sound output from the speaker if a call origination mode in which the communication terminal originates the call signal begins.

The controller may determine that the call destination mode begins if a first signal for notifying of a call reception state is received from the first communication terminal, and determine that a call origination mode begins if a second signal for notifying of a call origination state is received from the first communication terminal.

The controller may display a message for inquiring whether to perform a mute function on the display if the call origination mode in which the first communication terminal originates the call signal starts, and may turn off the sound output of the speaker if the mute function is selected according to the message.

The communicator may perform communication with the communication terminal in a Bluetooth method.

The communicator may exchange voice call signals with the second communication terminal through the first communication terminal.

According to another aspect of one or more exemplary embodiments, a display device includes a display configured to display content; a speaker configured to output sound of the content; a communicator configured to connect communication with a first communication terminal; and a controller configured to control the display to display an inquiry message for selecting whether to accept a video call on the display in response to a video call destination mode in which the first communication terminal receives a video call signal from a second communication terminal beginning.

The controller may be further configured to connect to a video call with the second communication terminal on a condition that a first user command to consent to the video call is input according to the inquiry message, and to control the display to cease displaying the content and display a video call content.

The controller may be further configured to resume displaying the content on a condition that the video call is ended.

The communicator may exchange video call signals with the second communication terminal through the first communication terminal.

According to another aspect of one or more exemplary embodiments, a communication terminal includes a first communicator configured to perform a phone call with another communication terminal; a second communicator configured to perform communication with a display device; and a controller configured to transmit a first signal for notifying the display device of a call reception state if a call signal is received from the other communication terminal and to transmit a second signal for notifying the display device of a call origination state if the call signal is sent to the other communication terminal, wherein the controller relays the phone call between the other communication terminal and the display device if a first user command to consent to a call is received from the display device, and transmits a call rejection signal to the other communication terminal if a second user command to reject the call is input from the display device.

According to one or more exemplary embodiments, a voice call method of a display device includes displaying content; connecting communication with a first communication terminal; and displaying an inquiry message for selecting whether to accept a call if a call destination mode in which the first communication terminal receives a call signal from a second communication terminal starts.

The voice call method may further include stopping a sound output of the content and connecting a phone call with the second communication terminal if a first user command to consent to a call is input according to the inquiry message; and transmitting a call rejection signal to the first communication terminal if a second user command to reject the call is input according to the inquiry message.

The voice call method may further include resuming the sound output of the content if the phone call with the other communication terminal is ended.

The voice call method may further include automatically controlling a volume level of the output sound if a call origination mode in which the communication terminal originates the call signal begins.

The voice call method may further include determining that the call destination mode starts if a first signal for notifying of a call reception state is received from the first communication terminal, and determining that a call origination mode starts if a second signal for notifying of a call origination state is received from the first communication terminal.

The voice call method may further include displaying a message for inquiring whether to perform a mute function if the call origination mode in which the first communication terminal originates the call signal starts; and turning off the sound output of the content if the mute function is selected according to the message.

The voice call method may further include exchanging voice call signals with the second communication terminal through the first communication terminal.

According to one or more exemplary embodiments, a video call method of a display device includes displaying content; connecting communication with a first communication terminal; and displaying an inquiry message for selecting whether to accept a video call on the display in response to a video call destination mode in which the first communication terminal receives a video call signal from a second communication terminal beginning.

The video call method may further include connecting the display to a video call with the second communication terminal on a condition that a first user command to consent to the video call is input according to the inquiry message; ceasing to display the content; and displaying a video call content.

The video call method may further include resuming the display of the content on a condition that the video call is ended.

The voice call method may further include exchanging video call signals with the second communication terminal through the first communication terminal.

According to one or more exemplary embodiments, a voice call method of a communication terminal includes transmitting a first signal for notifying the display device of a call reception state if a call signal is received from another communication terminal; transmitting a second signal for notifying the display device of a call origination state if the call signal is sent to the other communication terminal; relaying a phone call between the other communication terminal and the display device if a first user command to consent to a call is received from the display device; and transmitting a call rejection signal to the other communication terminal if a second user command to reject the call is input from the display device.

As described above, according to various embodiments, a user can make a voice call or a video call conveniently and efficiently through the mutual coupling between the display device and the communication terminal.

The above and other aspects, features and advantages of one or more exemplary embodiments will be more apparent from the following detailed description when taken in conjunction with the accompanying drawings, in which:
FIG. 1 is a block diagram of a communication system according to an exemplary embodiment;
FIG. 2 is a block diagram of a display device according to an exemplary embodiment;
FIG. 3 is a block diagram of a communication terminal according to an exemplary embodiment;
FIG. 4 is a flowchart illustrating a voice call method of a display device according to an exemplary embodiment;
FIG. 5 is a flowchart illustrating a voice call method of a communication terminal according to an exemplary embodiment;
FIG. 6 is a timing diagram of a call destination mode in a voice call method according to an exemplary embodiment;
FIGS. 7 to 12 are views illustrating examples of screens of a display device according to various exemplary embodiments;
FIG. 13 is a timing diagram of a call origination mode in a voice call method according to an exemplary embodiment;
FIG. 14 is a view illustrating another example of a screen of a display device according to an exemplary embodiment;
FIG. 15 is a block diagram illustrating the detailed configuration of a controller according to an exemplary embodiment; and
FIG. 16 is a block diagram synthetically illustrating the configuration of a display device according to various exemplary embodiments.

Hereinafter, one or more exemplary embodiments will be described in detail with reference to the accompanying drawings.

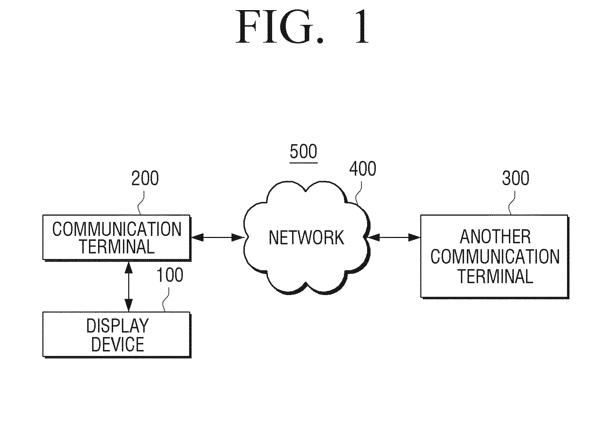

FIG. 1 is a block diagram of a communication system 500 according to an exemplary embodiment. Referring to FIG. 1, a communication system 500 includes a display device 100, a communication terminal 200, and another communication terminal 300. The communication terminal 200 and the other communication terminal 300 may be connected to each other through a network 400.

The communication terminal 200 means a communication terminal possessed by a user who uses the display device 100. The other communication terminal 300 may be a terminal which receives a call signal from the communication terminal 200 or transmits a call signal to the communication terminal 200. In this case, the communication terminal 200 and/or the other communication terminal 300 may be implemented, as non-limiting examples, by not only a mobile communication terminal, such as a portable phone or a tablet PC, but also a wired telephone. The communication terminal 200 and other communication terminal 300 may be implemented as similar devices or different devices.

The communication terminal 200 and the other communication terminal 300 may perform mutual call to each other by accessing the network 400 through an access point (not shown). The access point is a device that is accessed to connect a communication device to the network, and means a relay between two or more communication devices to transmit and receive signals. Since this refers to a well-known technology, the detailed explanation thereof will be omitted.

On the other hand, the communication terminal 200 and the display device 100 may perform communication with each other through various kinds of wireless communication methods or wired communication methods. In this case, the communication method may be determined according to the kind of communication chips included in the communication terminal 200 and the display device 100. As a non-limiting example, if Bluetooth chips are built in the communication terminal 200 and the display device 100, they can transmit/receive signals in the Bluetooth method. In addition, Wi-Fi chips, wireless communication chips, or NFC chips may be built in the communication terminal 200 and the display device 100. These are just examples and the display 100 and the communication terminal 200 may communicate through other means, such as, as a non-limiting example, through a wired connection.

The other communication terminal 300 may transmit a call signal to the communication terminal 200 through the network 400. Since the communication terminal 200 is connected to the display device 100 through a communication network (not shown), the communication terminal 200 may transmit a first signal for notifying that the call signal is received from the other communication terminal 300 to the display device 100. The display device 100, which has received the first signal, may start a call destination mode, and display an inquiry message for selecting whether to accept a call. That is, a user may consent to or reject the call according to a response to the inquiry message being displayed.

Further, the communication terminal 200 may transmit the call signal to the other communication terminal 300 through the network 400. In this case, since the communication terminal 200 is connected to the display device 100 through the communication network, the communication terminal 200 may transmit a second signal for notifying that the call signal is transmitted to the other communication terminal 300 to the display device 100. The display device 100, which has received the second signal, may start a call origination mode, and display an inquiry message for notifying whether to control an output level of a speaker 130 that outputs sound of content being displayed. That is, a user can control the output level of the speaker 130 according to the inquiry message being displayed.

Since means for connecting the communication terminal 200 and the display device 100 to each other through Bluetooth chips, Wi-Fi chips, wireless communication chips, or NFC chips refers to a well-known technology, the detailed explanation thereof will be omitted. Further, the detailed operation of the display device 100 and the communication terminal 200 will be described later.

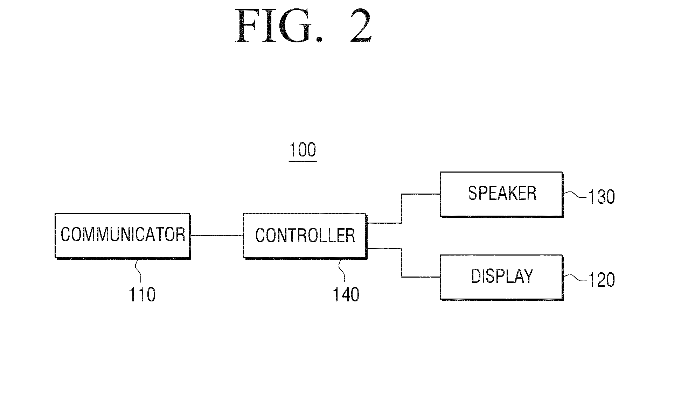

FIG. 2 is a block diagram of a display device 100 according to an exemplary embodiment. Referring to FIG. 2, a display device 100 includes a communicator 110, a display 120, a speaker 130, and a controller 140.

The display 120 displays content thereon. In this case, the displayed content may be broadcasting content that is received through an RF communication network or web content that is received through an IP communication network. Further, the display 120 may display content that is stored in a built-in memory of the display device 100 or content that is stored in an external device connected to the display device 100. The display 120 may be implemented in the form of a touch screen (not shown), may be implemented to be controlled by a remote control device (not shown), or may be implemented to be controlled by user's voice or motion.

Further, the display 120 may be implemented by one of various types of displays, such as, as non-limiting examples, an LCD (Liquid Crystal Display), and an OLED (Organic Light Emitting Diodes) display, a PDP (Plasma Display Panel). The display 120 may also include a driving circuit (not shown), which may be implemented in the form of, as non-limiting examples, a-si TFT, LTPS (Low Temperature Poly Silicon), TFT, or OTFT (Organic TFT), and a backlight unit (not shown).

In a state where the display device 100 and the communication terminal 200 are connected through the communication network, the communicator 110 may receive from the other communication terminal 200 the first signal notifying that the call signal is received from the other communication terminal 300. In this case, the display 120 may display an inquiry message for selecting whether to accept a call. The user may consent to or reject the call according to the inquiry message being displayed.

Further, in a state where the display device 100 and the communication terminal 200 are connected through the communication network the communicator 110 may receive the second signal from the communication terminal 200 for notifying that the call signal is transmitted to the other communication terminal 300. In this case, the display 120 may display the inquiry message for selecting whether to control the output level of the speaker 130 that outputs the sound of the content being displayed. The user can control the output level of the speaker 130 according to the inquiry message being displayed.

The speaker 130 outputs audio data. That is, the speaker 130 outputs the sound of the content that is displayed on the display 120. In this case, the speaker 130 may be prepared on various sides of the display device 100. In addition, the speaker 130 may be configured as a separate device from the display device 100, and in this case, the speaker 130 may be connected to the display device 100 wirelessly or through a wired connection.

On the other hand, in a state where the display device 100 and the communication terminal 200 are connected through the communication network, the communicator 110 may receive the first signal from the other communication terminal 200 for notifying that the call signal is received from the other communication terminal 300. In this case, the display 120 may display an inquiry message for selecting whether to accept a call. The user may consent to or reject the call according to the inquiry message being displayed. If the user consents to the call, the speaker 130 may output an audio signal that is received from the other communication terminal 300 without outputting the sound of the content being displayed. Alternatively, the speaker 130 may output the sound of the content being displayed with a level set by the user and may output the audio signal that is received from the other communication terminal 300 at the same time. If the communicator 110 receives a signal for notifying that the call between the communication terminal 200 and the other communication terminal 300 is terminated, the speaker 130 may output the sound of the content at the level that is prior to the controlled output level according to the inquiry message. However, if the user rejects the call, the speaker 130 may continue to output the sound of the content being displayed at a previous level.

Further, in a state where the display device 100 and the communication terminal 200 are connected through the communication network the communicator 110 may receive the second signal from the communication terminal 200 for notifying that the call signal is transmitted to the other communication terminal 300. In this case, the display 120 may display the inquiry message for selecting whether to control the output level of the speaker 130 that outputs the sound of the content being displayed. The user can control the output level of the speaker 130 according to the inquiry message being displayed. If the communicator 110 receives a signal for notifying that the call between the communication terminal 200 and the other communication terminal 300 is terminated, the speaker 130 may output the sound of the content with the level that is prior to the controlled output level according to the inquiry message.

The communicator 110 may perform communication through transmission/reception of signals with the communication terminal 200 that corresponds to one of various kinds of communication devices, such as, as non-limiting examples, a mobile communication terminal 200, a wired phone, and a wireless phone. That is, the communicator 110 may receive the signal that is received from the other communication terminal 300 through the communication terminal 200, and may transmit the signal that is transmitted to the other communication terminal 300 through the communication terminal 200. In this case, the communicator 110 may be connected to the communication terminal 200 through the communication network, and the communication network may be determined according to the kind of communication chips built in the communicator 110 and the communication terminal 200. If the communication chips built in the communicator 110 and the communication terminal 200 are Bluetooth chips, the signal can be transmitted and received between the communicator 110 and the communication terminal 200 in the Bluetooth method. In addition, the communication between the communicator 110 and the communication terminal 200 may be performed through various communication chips, such as Wi-Fi chips, wireless communication chips, and NFC chips.

If the call destination mode starts, the controller 140 may control the display 120 to display the inquiry message for selecting whether to accept the call. Here, the call destination mode means a case where the communication terminal 200 receives the call signal from the other communication terminal 300. Further, the call signal means a signal that one communication terminal 200 transmits to the other communication terminal 300 to make a call. Accordingly, if the communication terminal 200 transmits the call signal to the other communication terminal 300, the communication terminal 200 is in the call origination mode, and the other communication terminal 300 is in the call destination mode. Accordingly, the controller 140 may operate to connect a phone call with the other communication terminal 300 or to reject the phone call according to a user input with respect to the inquiry message.

Specifically, in a state where the communication terminal 200 and the communicator 110 of the display device 100 are connected through the communication network, the other communication terminal 300 transmits the call signal for the call connection to the communication terminal 200. The communication terminal 200, which has received the call signal from the other communication terminal 300, may transmit the first signal that corresponds to the received call signal to the communicator 110 of the display device 100. The communicator 110, which has received the first signal, transmits the received first signal to the controller 140, and the controller 140 may control the display 120 to display the inquiry message for selecting whether to accept the call. In this case, the display device 100 may be turned on to display the content or may be turned off not to display the content.

If the display device 100 is turned on to display the content, the controller 140 may operate to display the inquiry message in a state where the content is output. That is, the controller 140 may operate to display the inquiry message that corresponds to a screen of a predetermined size on one side of the display 120 that displays the content. At the same time, the controller 140 may output an inquiry voice that corresponds to an inquiry message through the speaker 130 that outputs the sound of the content. In this case, the controller 140 may output the inquiry voice, simultaneously outputting the sound of the content with the output level that is reduced to a predetermined level, or may output the inquiry voice in a state where the sound of the content is muted. Further, the controller 140 may operate to display only the inquiry message without outputting the inquiry voice.

If the display device 100 is turned off and the content is not displayed, the controller 140 may control the display device 100 to be turned on to display the inquiry message. Here, the term "turned off" may mean soft power off.

The soft power off means a state where the controller 140 is kept in a standby state but the power supply to the remaining constituent elements is turned off. In this state, the controller 140 may turn on the display device 100 to control the display 120 to display the inquiry message on one side of the display 120.

Further, according to another embodiment, even if the display device 100 is turned on, the content may not be displayed. At the same time, the controller 140 may output the inquiry voice that corresponds to the inquiry message through the speaker 130. In addition, the controller 140 may operate to display only the inquiry message and may not output the inquiry voice.

Thereafter, if the user inputs a first user command to consent to the call, the controller 140 may operate to connect the phone call. Specifically, if the user inputs the first user command, the controller 140 may transmit a signal that corresponds to the first user command to the communication terminal 200 through the communicator 110. In this case, the communication terminal 200, which has received the signal that corresponds to the first user command, may start communication with the other communication terminal 300. That is, the communication terminal 200 may transmit the audio signal that is received from the other communication terminal 300 to the communicator 110, and the display device 100 may output the transmitted audio signal. The communication terminal 200 may transmit the audio signal that is received from the display device 100 to the other communication terminal 300, and the other communication terminal 300 may output the transmitted audio signal.

Further, if the user inputs the first user command, the controller 140 may operate to display a selection message. The selection message may include various call option functions including a call end function. Accordingly, if the call end function is selected, the phone call is ended, and the display device 100 may restore to the state prior to the call destination mode.

In contrast, if the user inputs a second user command to reject the call, the controller 140 may operate not to connect the phone call. Specifically, if the user inputs the second user command, the controller 140 may transmit a signal that corresponds to the second user command to the communication terminal 200 through the communicator 110. In this case, the communication terminal 200, which has received the signal that corresponds to the second user command, may transmit a signal for rejecting communication with the other communication terminal 300 to the other communication terminal 300. Through this, the phone call is not made, and the display device 100 may restore to the state prior to the call destination mode.

On the other hand, if the call origination mode starts, the controller 140 may operate to control the volume level of the sound that is output from the speaker 130. Here, the call origination mode means a case where the communication terminal 200 sends the call signal to the other communication terminal 300. In this case, the controller 140 may operate to control the volume level of the sound of the content that is displayed according to the user input against the inquiry message.

Specifically, in a state where the communication terminal 200 and the communicator 110 of the display device 100 are connected through the communication network, the communication terminal 200 transmits the call signal for the call connection to the other communication terminal 300. At the same time, the communication terminal 200 may transmit the second signal that corresponds to the call signal that is transmitted to the communicator 110 of the display device 100. The communicator 110, which has received the second signal, may transmit the second signal to the controller 140, and the controller 140 may control the display 120 to display the inquiry message for inquiring whether to control the sound volume of the content that is displayed. The user may control the volume of the speaker 130 according to a guide provided in the inquiry message. Accordingly, the user can perform the phone call through the communication terminal 200 while viewing the content with the volume appropriate to the phone call.

Thereafter, if the call is completed, the display device 100 may restore to the state prior to the call destination mode. That is, the volume level of the sound of the content that is displayed after the call completion may restore to the volume level prior to the volume control.

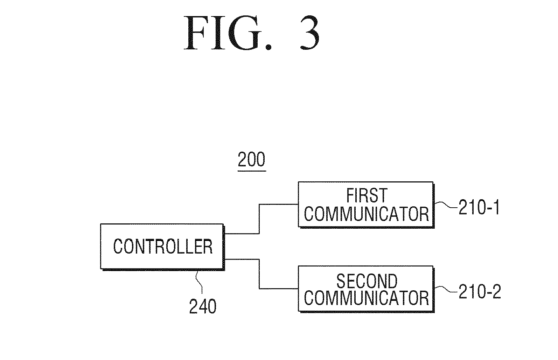

FIG. 3 is a block diagram of a communication terminal 200 according to an exemplary embodiment. Referring to FIG. 3, a communication terminal 200 includes a first communicator 210-1, a second communicator 210-2, and a controller 240.

The first communicator 210-1 may transmit and receive a signal with another communication terminal 300 in order to perform communication with the other communication terminal 300. In this case, the first communicator may transmit and receive the signal with the other communication terminal 300 through a relay of an access point or may directly transmit and receive the signal with the other communication terminal 300.

The second communicator 210-2 may transmit and receive a signal with the communicator 110 of the display device in order to perform the communication with the display device. The second communicator 210-2 may have a built-in communication chip that is the same as the communication chip built in the communicator 110 of the display device. As non-limiting examples, the second communicator 210-2 may have a Bluetooth chip, a Wi-Fi chip, a wireless communication chip, or an NFC chip, which is built therein.

The controller 240 may control communication with the other communication terminal 300 through the first communicator 210-1, and may control communication with the display device through the second communicator 210-2 at the same time.

For example, in a state where the second communicator 210-2 is connected to the communicator 110 of the display device, the first communicator 210-1 may receive the call signal from the other communication terminal 300. The first communicator 210-1, which has received the call signal, transmits the received call signal to the controller 240, and the controller 240 transmits the first signal to the second communicator 210-2. The second communicator 210-2 transmits the first signal to the communicator 110 of the display device, and thus the display device can start the call destination mode.

If the second communicator 210-2 receives the first user command to consent to the call from the communicator 110 of the display device, the controller 240 connects a phone call with the other communication terminal 300. Accordingly, the phone call between the other communication terminal 300 and the display device 100 can be performed through the communication terminal 200. If the second communicator 210-2 receives the second user command to reject the call from the communicator 110 of the display device, the controller 240 does not make a phone call with the other communication terminal 300. Through this, the communication terminal 200 restores to the state prior to the call signal reception.

In a state where the second communicator 210-2 and the communicator 110 of the display device 100 are connected to each other, the controller 240 may transmit the call signal to the other communication terminal 300 through the first communicator 210-1. At the same time, the controller 240 transmits the second signal to the second communicator 210-2. The second communicator 210-2 transmits the second signal to the communicator 110 of the display device 100, and thus the display device 100 can start the call origination mode. Thereafter, whether to start or end the phone call may be determined depending on whether another user controls the other communication terminal 300 or whether the user controls the communication terminal 200. If the call between the communication terminal 200 and the other communication terminal 300 is completed, the communication terminal 200 restores to the state prior to the call signal origination to the other communication terminal 300.

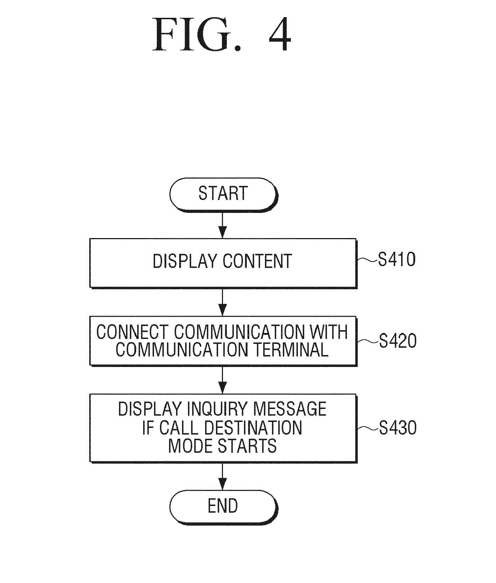

FIG. 4 is a flowchart illustrating a voice call method of a display device 100 according to an exemplary embodiment. Hereinafter, explanation of the portions duplicate to those as described above will be omitted.

The display device 100 may be turned on and may display content (S410). The displayed content may be, as non-limiting examples, broadcasting content that is received through an RF communication network or web content that is received through an IP communication network. As another example, the display 120 may display content that is stored in a built-in memory of the display device 100 or content that is stored in an external device connected to the display device 100.

In addition, the display device 100 may be turned off and may not display the content. In this case, the display device is in a soft power-off state, in which only devices to perform communication with a communication terminal 200 may be in a turn-on state.

Thereafter, the display device 100 may connect communication with the communication terminal 200 (S420). That is, the communication may be performed through the communication chips built in the display device 100 and the communication terminal 200. For example, if the display device 100 and the communication terminal 200 are within a predetermined distance, the communication can be automatically performed. In addition, if the communication terminal 200 approaches the display device 100, the display device 100 may display a message for inquiring whether to perform communication with the communication terminal 200. As another example, the display device 100 may be connected to the communication terminal 200 by a wired connection.

Thereafter, the communication terminal 200 may receive a call signal from another communication terminal 300. The communication terminal 200, which has received the call signal, may transmit a first signal that corresponds to the received call signal to the display device 100. The display device 100, which has received the first signal, starts a call destination mode.

Accordingly, if the call destination mode starts, the display device 100 may display an inquiry message for the user to select whether to accept the call (S430). The user may consent to or reject the call through the inquiry message.

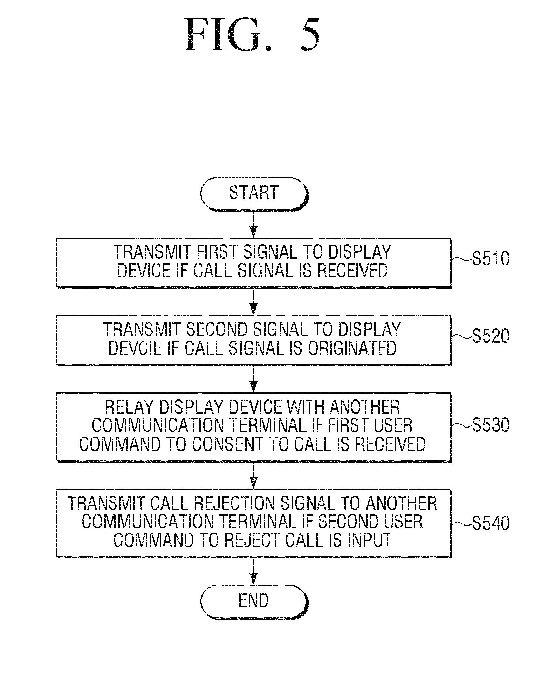

FIG. 5 is a flowchart illustrating a voice call method of a communication terminal 200 according to an exemplary embodiment. Hereinafter, explanation of the portions duplicate to those as described above will be omitted.

The communication terminal 200 may receive a call signal from another communication terminal 200. The communication terminal 200, which has received the call signal, may transmit a first signal that corresponds to the receive call signal to a display device 100 (S510). In this case, the display device 100 starts a call destination mode, and the user may consent to or reject the call.

On the other hand, the communication terminal 200 may transmit a call signal to another communication terminal 300. The communication terminal 200, which has transmitted the call signal, may transmit a second signal that corresponds to the transmitted call signal to the display device 100 (S520). In this case, the display device 100 may start a call origination mode, and the user may control the volume level of content that is output from the display device 100.

On the other hand, if the display device 100 is in the call destination mode, the user may input a first user command to consent to the call. The display device 100 may transmit a signal that corresponds to the first user command to the communication terminal 200, and the communication terminal 200 may serve as a relay between the other communication terminal 300 and the display device 100 (S530). Accordingly, through the communication terminal 200, a phone call may be made between the other communication terminal 300 and the display device 100.

In contrast, if the display device 100 is in the call destination mode, the user may input a second user terminal to reject the call. The display device 100 may transmit a signal that corresponds to the second user command, and the communication terminal 200 may transmit the signal to the other communication terminal 300 (S540). Through this, the phone call is not performed, and the display device 100 restores to the state prior to the start of the call destination mode.

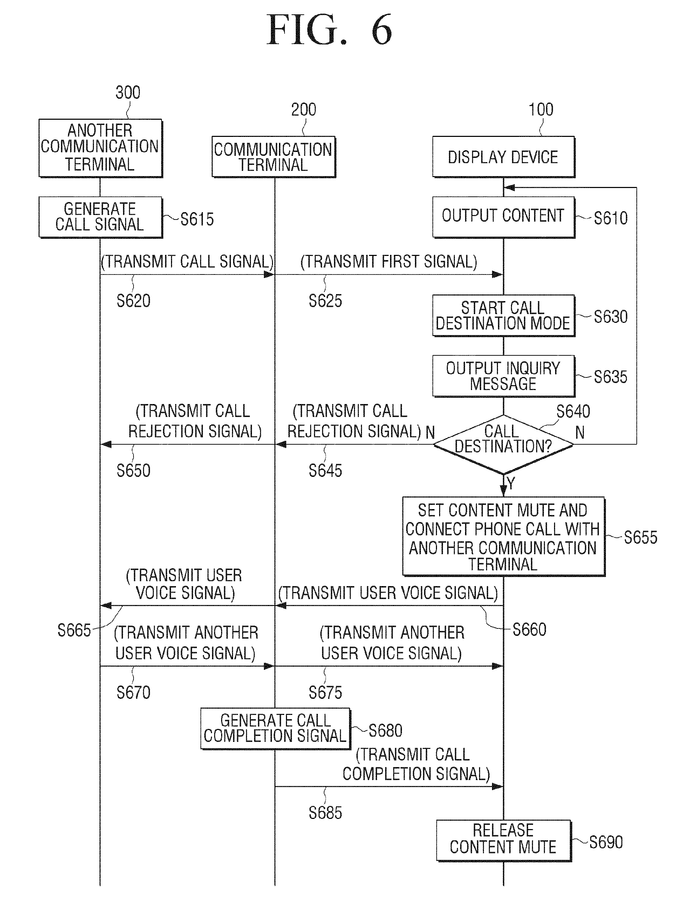

FIG. 6 is a timing diagram of a call destination mode in a voice call method according to an exemplary embodiment of the present disclosure.

A display device 100 is turned on and outputs content (S610). In addition, the display device 100 may be in a soft power-off state.

On the other hand, another communication terminal 300 generates a call signal to make a call with a communication terminal 200 (S615). The other communication terminal 300 transmits the generated call signal to the communication terminal 200 (S620), and the communication terminal 200, which has received the call signal, transmits a first signal that corresponds to the call signal to the display device 100 (S625).

The display device 100, which has received the first signal, starts a call destination mode (S630). Then, the display device 100 outputs an inquiry message for a user to select whether to accept the call (S635). In this case, the inquiry message may be displayed on the screen so that the user can visually confirm the inquiry message, and may be output through a speaker 130 so that the user can aurally confirm the inquiry message. Through this, the user can select whether to accept the call (S640).

If the user rejects the call (S640_N), the display device 100 transmits a call rejection signal to the communication terminal 200 (S645), and the communication terminal 200, which has received the call rejection signal, transmits the call rejection signal to the other communication terminal 300 (S650). Through this, the display device 100 restores to the state prior to the call destination mode.

In contrast, if the user consents to the call (S640_Y), the display device 100 sets to mute the displayed content, and connects the phone call with the other communication terminal 300 (S655). Alternatively, the user may control the volume level of the display content, or the volume may be automatically controlled at a predetermined level. Through this, the display device 100 can start the phone call with the other communication terminal 300. That is, user voice signal that is input to the display device 100 is transmitted to the communication terminal 200 (S660), and the communication terminal 200 transmits the user voice signal to the other communication terminal 300 (S665). Further, a voice signal of another user is transmitted from the other communication terminal 300 to the communication terminal 200 (S670), and the communication terminal 200 transmits the voice signal to the display device 100 (S675).

Thereafter, the communication terminal 200 generates a call completion signal for completing the phone call (S680). The generated call completion signal is transmitted to the display device 100 (S685), and the display device 100 may release a mute setting of the content (S690), and restore to the state prior to the call destination mode. As another example, the call completion signal may be generated from the display device 100, and the display device 100 may transmit the call completion signal to the communication terminal 200. As another example, a call completion signal may generated by the other communication terminal 300 and transmitted to the communication terminal 200 and the display 100.

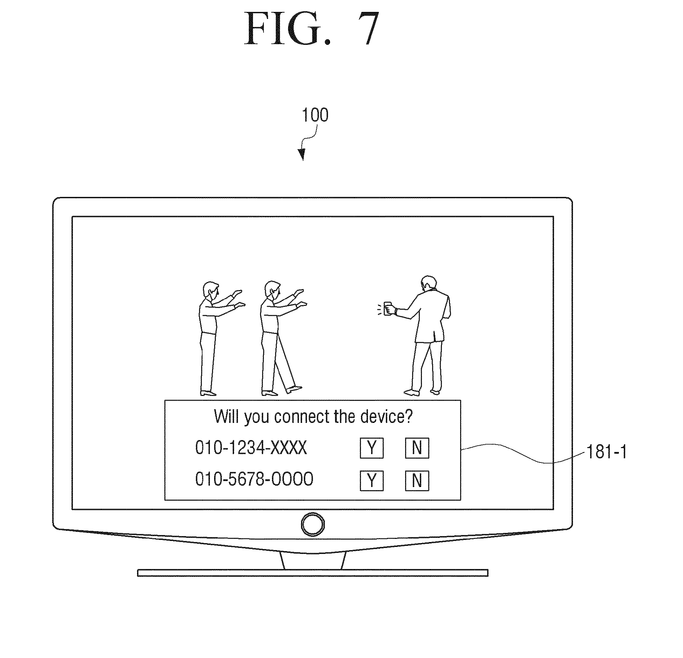

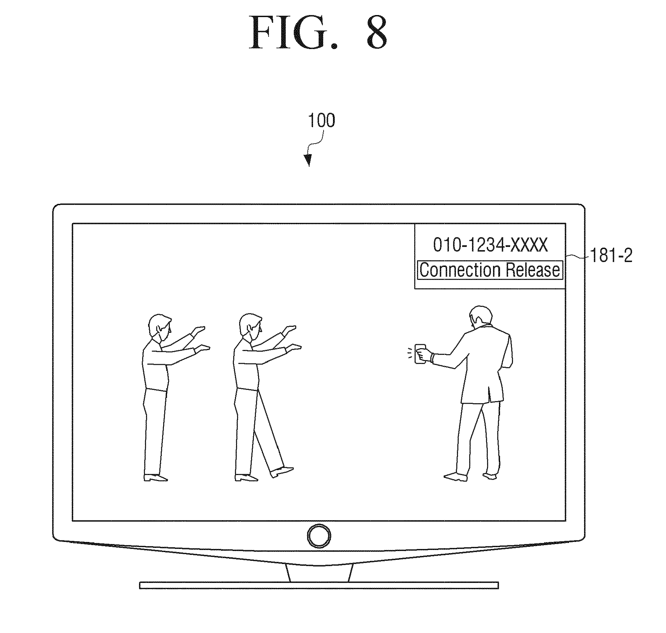

FIGS. 7 to 12 are views illustrating examples of screen of a display device 100 according to various exemplary embodiments. First, referring to FIGS. 7 and 8, a connection between a display device 100 and a communication terminal 200 will be described.

In a state where the display device 100 is in a turn-on state or in a soft power-off state, the communication terminal 200 may move in range of the communicator 110 of the display device 100. In this case, since the communication terminal 200 and the display device 100 have the same communication chips built therein, the display device 100 can search for and recognize the approaching communication terminal 200. Accordingly, the display device 100 may display a connection inquiry message 181-1 for inquiring whether to connect to the communication terminal 200. In this case, the connection inquiry message 181-1 may display an identification number of the communication terminal 200 which is recognized by the display device 100. Preferably, a phone number that is assigned to the communication terminal 200 may be displayed.

On the other hand, two or more communication terminals 200 may move in range of the communicator 110 of the display device 100. In this case, as illustrated in FIG. 7, the display device 100 may display the recognized communication terminals 200. The user may select the communication terminal 200 to be connected to the display device 100 through the connection inquiry message 181-1, and may determine whether to connect to the display device 100.

In this case, the user may confirm the user's own phone number through the connection inquiry message 181-1, and may select connection consent. Accordingly, the display device 100 can perform communication with the communication terminal 200 of which the user has consented to the connection. Further, the display device 100 may form a region on one side of the display 120 and may display the connection-consented communication terminal 200 thereon. That is, as illustrated in FIG. 8, a connection state message 181-2 is displayed on one side of the display 120. The connection state message 181-2 may display the identification number of the communication terminal that performs communication with the display device 100. Further, a connection release region for inputting a command to release the communication between the display device 100 and the communication terminal 200 may be formed.

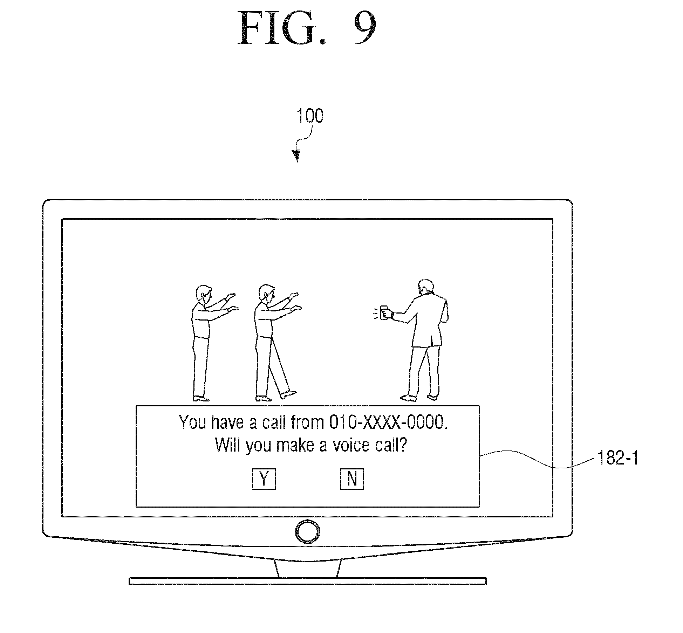

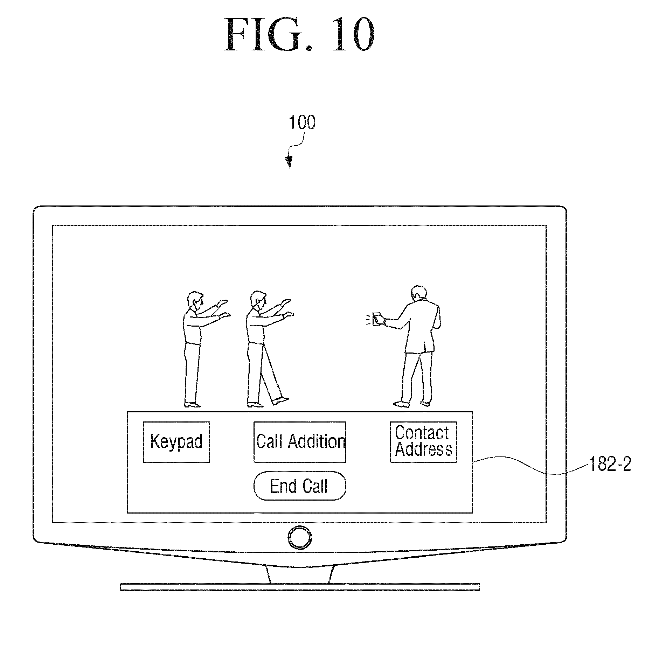

Referring to FIGS. 9 and 10, voice calls performed through the display device 100 that starts the call destination mode will be described.

FIG. 9 is a view explaining the operation of the display device 100 according to an exemplary embodiment. Referring to FIG. 9, if a user has a phone call while content is displayed on the screen, the display device 100 may inquire from the user whether to receive the call.

That is, as described above with reference to FIG. 8, the display device 100 is connected to the communication terminal 200. In this state, if the other communication terminal 300 transmits a voice call signal to the communication terminal 200, the communication terminal 200 transmits the first signal that corresponds to the voice call signal to the display device 100.

The display device 100, which has received the first signal, may display a voice call inquiry message 182-1 as illustrated in FIG. 9. The voice call inquiry message 182-1 may be displayed on a region that is formed on one side of the display 120. The voice call inquiry message 182-1 may display a message for notifying that a call signal is received from the other communication terminal 300. In this case, a phone number, owner information, and a photograph, which correspond to the other communication terminal 300 may be displayed.

That is, if the phone number of the other communication terminal 300 is stored in the communication terminal 200 and matches text (e.g., owner information) or a photograph that corresponds to the corresponding phone number, the voice call inquiry message 182-1 may include, as non-limiting examples, at least one of the phone number of the other communication terminal 300, the text that matches the phone number, and the photograph. The user may determine whether to accept the call through confirmation of the voice call inquiry message 182-1.

Further, the display device 100 may output sound that corresponds to the voice call inquiry message 182-1. That is, if a voice call destination mode starts, a call destination notification sound may be output through the speaker 130 of the display device 100. Alternatively, the communication terminal 200 may not output such a destination notification sound.

If the user consents to the voice call in a state where the display device 100 displays the content, the user can perform a voice call through the display device 100. That is, the display device can transmit and receive a user voice signal and another user voice signal with respect to the other communication terminal 300 in a state where the content is displayed.

In this case, as illustrated in FIG. 10, the display device 100 may display a voice call option message 182-2. The voice call option message 182-2 is a message for providing various call options in a state where the voice call is performed with the other communication terminal 300, and call end may be selected through the voice call option message 182-2.

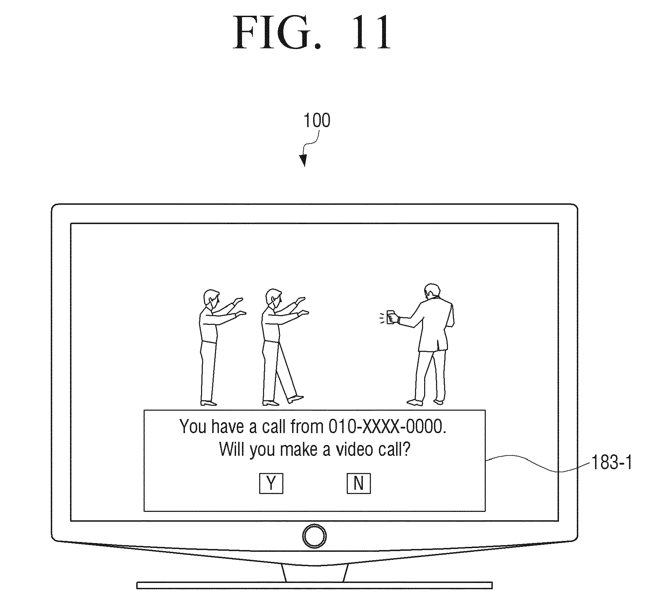

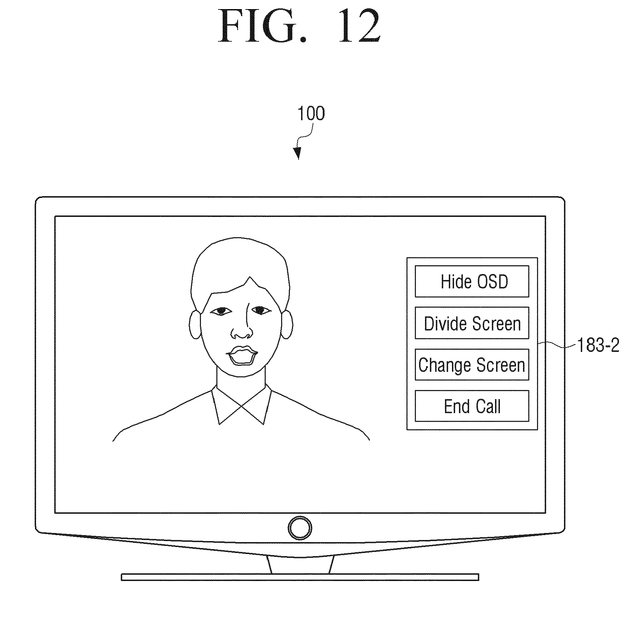

Although the voice call that is performed through the display device has been described, the display device 100 according to an exemplary embodiment may also be applied to a video call. Referring to FIGS. 11 and 12, a voice call through the display device 100 that has started the call destination mode will be described.

As described above with reference to FIG. 8, the display device 100 is connected to the communication terminal 200. In this state, if the other communication terminal 300 transmits a video call signal to the communication terminal 200, the communication terminal 200 transmits the first signal that corresponds to the video call signal to the display device 100. The display device 100, which has received the first signal, may display a video call inquiry message 183-1 as illustrated in FIG. 11.

As illustrated in FIG. 11, the video call inquiry message 183-1 may be displayed on a region that is formed on one side of the display 120. Since explanation of the video call inquiry message 183-1 is the same as the explanation of the voice call inquiry message 182-1, the detailed explanation thereof will be omitted. Further, the display device 100 may output sound that corresponds to the video call inquiry message 183-1. That is, if a video call destination mode starts, a video call destination notification sound may be output through the speaker 130 of the display device 100. However, this in only an example, and the communication terminal 200 may not output such a destination notification sound.

If the user consents to the video call in a state where the display device 100 displays the content, the user can perform a video call through the display device 100. That is, as illustrated in FIG. 12, the display 120 can display a screen that corresponds to an image signal that is transmitted from the other communication terminal 300 instead of the content screen. Further, the speaker 130 may output sound that corresponds to the voice signal transmitted from the other communication terminal 300 instead of the content sound.

As illustrated in FIG. 12, the display device 100 may display a video call option message 183-2. The video call option message 183-2 is a message for providing various call options in a state where the video call is performed with the other communication terminal 300, and the call end may be selected through the video call option message 183-2.

The user selection as described above may be performed through various means. For example, the user selection may be performed through a remote control device, voice recognition means, and a motion recognition means.

According to still another exemplary embodiment, the communication terminal may perform different operations in the case where the user receives a voice call from the other communication terminal 300 and in the case where the user receives a video call from the other communication terminal 300.

Specifically, if there is a voice call, the communication terminal 200 may activate a speaker and a microphone provided therein to perform the voice call in the communication terminal 200 itself without connecting the communication with the display device 100 as described above. In contrast, if there is a video call, the communication terminal 200 may display a guide message as illustrated in FIG. 11, and if the user consents to the video call, the communication terminal 200 supports the video call using the display device 100 as illustrated in FIG. 12. In this case, the communication terminal 200 decodes image and voice signals that are transmitted from the other communication terminal through the network 400 and provides decoded signals to the display device 100. Accordingly, the user can perform the voice call while viewing the display device 100, and can perform the video call using a screen of the display. Accordingly, the service range that the user can select can be widened.

On the other hand, even in the case where the user intends to make a video call using the communication terminal 200, the display device 100 can be used. That is, if the user presses a video call button after inputting or selecting the phone number of an opposite party, the controller 240 may display a guide message for inquiring whether to perform the video call using the display device 100 through its own display (not illustrated). If the user consents to the corresponding guide message, the controller 240 connects communication with the display device 100 and relays the video call between the display device 100 and the other communication terminal 300. On the other hand, in order to achieve the video call, a camera or a microphone may also be provided in the display device 100.

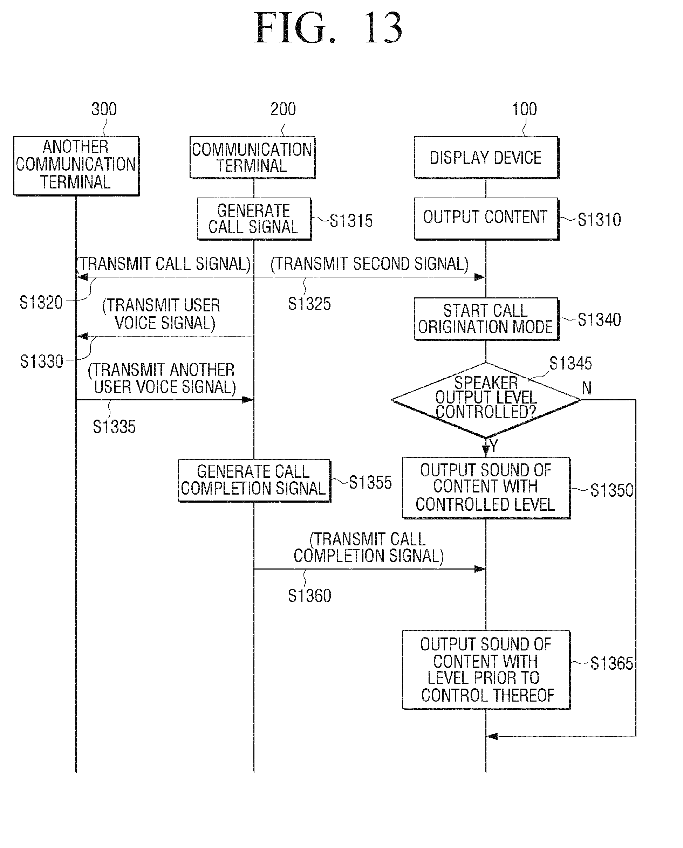

FIG. 13 is a timing diagram of a call origination mode in a voice call method according to an exemplary embodiment,

A display device 100 is turned on and outputs content (S1310). Alternatively, the display device 100 may be in a soft power-off state.

A communication terminal 200 generates a call signal to make a call with another communication terminal 300 (S1315). The communication terminal 200 transmits the generated call signal to the other communication terminal 300 (S1320), and transmits a second signal that corresponds to the call signal to the display device 100 (S1325).

If it is assumed that the call between the other communication terminal 300 and the communication terminal 200 starts, the communication terminal 200 transmits a user voice signal to the other communication terminal 300 (S1330), and the other communication terminal 300 transmits another user voice signal to the communication terminal 200 (S1335).

The display device 100, which has received the second signal, starts a call origination mode (S1340). Then, the display device 100 outputs an inquiry message for a user to select whether to control the output level of the content sound (S1345).

If the user does not control the output level of the content sound (S1345_N), the display device 100 outputs the output level of the content sound as it is.

In contrast, if the user controls the output level of the content sound (S1345_Y), the display device 100 outputs the content sound with the controlled output level (S1350). In this case, the volume may be automatically controlled to a predetermined level.

Thereafter, the communication terminal 200 generates a call completion signal for completing the phone call (S1355). The generated call completion signal is transmitted to the display device 100 (S1360, and the display device 100 may return to the state prior to the call origination mode. That is, the speaker 130 may output the content sound at the level prior to the control thereof (S1365).

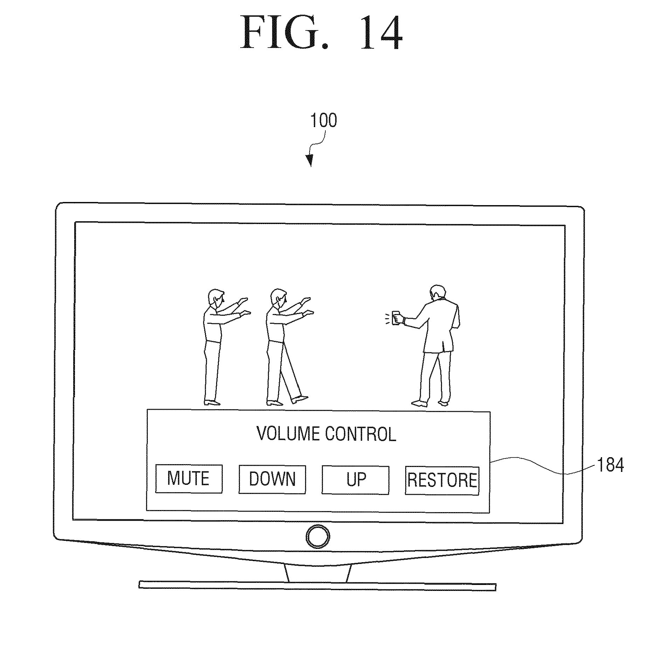

FIG. 14 is a view illustrating another example of a screen of a display device 100 according to an exemplary embodiment. Hereinafter, the screen displayed on the display device 100 in a call origination mode will be described.

If a communication terminal 200 sends a call signal to another communication terminal 300, a display device 100 starts a call origination mode. A user may send a call signal to the other communication terminal 300 through the communication terminal 200. In addition, by selecting a phone function that is desired by the user among a plurality of phone functions that are displayed on a display 120, the user can make a phone call through the display device 100.

If the call origination mode starts, as illustrated in FIG. 14, the display 120 may display a volume control message 184. The volume control message 184 may be displayed on one side of the display 120, and the sound volume of the content that is currently displayed can be variously controlled. That is, the user, who has transmitted the call signal to the other communication terminal 300, can variously control the volume level of the content sound that is currently output from the speaker 130 of the display device 100. In this case, the content, which is currently displayed, can be continuously displayed.

FIG. 14 illustrates a case where the user manually controls the volume level in the call origination mode. However, the volume level may be automatically controlled.

Specifically, according to still another exemplary embodiment, the controller 140 of the display device 100 may operate to output the sound of the content according to a predetermined volume level. That is, the user can set the volume level of the content sound that is output from the speaker 130 in the call origination mode and/or call destination mode at a time prior to receiving the call.

Accordingly, if the display device 100 starts the call origination mode, the speaker 130 may output the content sound according to the predetermined volume level. For example, if the volume level is set to be "o", the controller 140 may perform a mute function to control the volume level of the content sound to "o" when the call origination is performed.

If the user performs a video call, the display 120 may display a screen corresponding to an image signal that is received from the other communication terminal 300 instead of displaying the screen of the content that is currently displayed. In addition, the display 120 may divide the screen and may display the content screen and the screen of the received image signal on the divided screens.

The user selection as described above may be performed through various means. As non-limiting examples, the user selection may be performed through a remote control device, voice recognition means, and a motion recognition means.

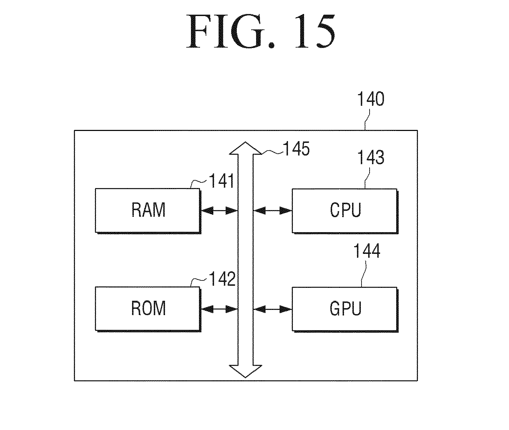

FIG. 15 is a block diagram illustrating the detailed configuration of a controller according to an exemplary embodiment.

Referring to FIG. 15, a controller 140 controls the overall operation of the display device. The controller 140 includes a RAM 141, a ROM 142, a CPU 143, a GPU 144, and a bus 145. The RAM 141, the ROM 142, the CPU 143, and the GPU 144 may be connected to each other through the bus 145.

The CPU 143 accesses the storage, and performs booting using an O/S stored in the storage. Further, the CPU 143 performs various operations using various kinds of programs, content, and data stored in the storage. Further, the CPU 143 analyzes a user command input from a remote control device, a voice command according to a users' voice input, and an operation command according to the user's motion input, and extracts corresponding control command from the storage.

A command set for system booting may be stored in the ROM 142. If a power is supplied through an input of a turn-on command, the CPU 143 copies the O/S that is stored in the storage into the RAM 141 according to a command stored in the ROM 142, and boots the system through execution of the O/S. If the booting is completed, the CPU 143 copies various kinds of programs stored in the storage into the RAM 141, and performs various kinds of operations through execution of the programs copied into the RAM 141.

If the booting of the display device 100 is completed, the GPU 144 displays an item screen, a content screen, or a search result screen. Specifically, the GPU 144 may generate a screen that includes various objects, such as an icon, an image, and a text, using an operator (not illustrated) and a renderer (not illustrated). The operator determines attribute values, such as coordinate values, shapes, sizes, and colors of the objects, according to a layout of the screen. The renderer generates various layout screens including the objects based on the attribute values operated by the operator. The screen that is generated by the renderer is provided to the display 120, and is displayed in the display region.

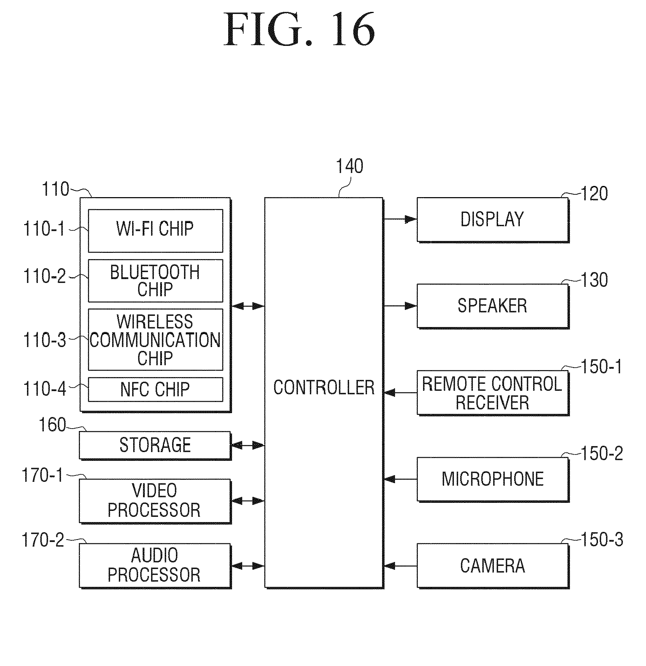

FIG. 16 is a block diagram illustrating the overall configuration of a display device 100 according to an exemplary embodiment.

Referring to FIG. 16, a display device 100 may include a communicator 110, a display 120, a speaker 130, a controller 140, a remote control receiver 150-1, a microphone 150-2, a camera 150-3, a storage 160, a video processor 170-1, and an audio processor 170-2.

The display 120, as non-limiting examples, may be implemented by a general LCD display or may be implemented in a touch screen type. The remote control receiver 150-1 may receive a signals transmitted from the remote control device and transmit the received signals to the controller 140. Further, the microphone 150-2 may receive and transmit a user voice signal to the controller 140. Further, the camera 150-3 may receive and transmit a user motion signal to the controller 140. If the display is implemented by a touch screen, the user may touch the screen to control the operation of the display device 100.

The speaker 130 outputs audio data that is generated from the audio processor 170-2.

The remote control receiver 150-1 may receive an operation signal that is transmitted from an external remote control device and may transmit the received operation signal to the controller 140. In this case, the remote control receiver 150-1 may be formed in a certain region, such as a front portion, a side portion, or a rear portion of the external appearance of the main body of the display device 100.

The microphone 150-2 is configured to receive an input of a user voice or other sound and to convert the input voice or sound into audio data. The controller 140 may compare the user voice input through the microphone 150-2 with a pre-stored user voice to perform a control operation, or may convert the user voice into audio data to store the audio data in the storage 160. In particular, if the microphone 150-2 is provided, the controller 140 may compare the user voice received through the microphone 150-2 with the user voice stored in the storage 160, and if it is determined that the received user voice is the same as the stored user voice, the controller 140 may perform the corresponding control operation.

The camera 150-3 may capture a still image or a moving image according to the user's control, and may capture and transmit a user's motion that corresponds to a control command to the controller 140. The camera 150-3 may be a plurality of cameras 150-3, such as a front camera and a rear camera, may be provided and may capture a still image or a moving image together or independently.

The communicator 110 is configured to perform communication with various types of external devices, and particularly the communication terminal 200, according to various types of communication methods. The communicator 110 may include, as non-limiting examples, a Wi-Fi chip 110-1, a Bluetooth chip 110-2, a wireless communication chip 110-3, and an NFC chip 110-4. Accordingly, if a communication chip that is the same as the communication chip built in the communicator 110 is built in the communication terminal 200, and the communicator 110 is near enough to the communication terminal 200 to perform communication with each other, the communication can be performed.

The Wi-Fi chip 110-1 and the Bluetooth chip 110-2 perform communication in a Wi-Fi method and in a Bluetooth method. In the case of using the Wi-Fi chip 110-1 or the Bluetooth chip 110-2, various kinds of connection information, such as SSID and a session key, is first transmitted/received, communication connection is performed using such connection information, and then the various kinds of information may be transmitted/received. The wireless communication chip 110-3 means a chip that performs communication according to various communication standards, such as IEEE, ZigBee, 3G (3^{rd} Generation), 3GPP (3^{rd} Generation Partnership Project), and LTE (Long Term Evolution). The NFC chip 110-4 means a chip which operates in an NFC (Near Field Communication) method that uses a band of 13.56 MHz among various RF-ID frequency bands of 135 KHz, 13.56 MHz, 433 MHz, 860-960 MHz, and 2.45 GHz. Further, the communication 110 may communicate with the communication terminal 200 through a wired connection.

Further, the communicator 110 may communicate with various external server devices, such as a search server. In addition, the communicator 110 may directly perform communication with various types of external devices rather than a server device to perform a search.

The storage 160 is a constituent element for storing various kinds of programs and data that are required for the operation of the display device 100. The controller 140 controls the overall operation of the display device 100 using the various kinds of programs and data stored in the storage 160. In particular, the storage 160 may store levels of content sound output from the speaker in the call destination mode or the call origination mode.

The video processor 170-1 is a constituent element for processing video data which is included in the content that is received through the communicator 110 or the content that is stored in the storage 160. That is, the video processor 170-1 may perform various image processes, such as decoding, scaling, noise filtering, frame rate conversion, and resolution conversion, with respect to the video data. In this case, the display 120 may display image frames generated by the video processor 170-1.

The audio processor 170-2 is a constituent element for processing audio data that is included in the item that is received through the communicator 110 or the item that is stored in the storage 160. The audio processor 170-2 may perform various processes, such as decoding, amplification, and noise filtering, with respect to the audio data.

In a display device that supports a motion control mode or a voice control mode, a voice recognition technology or a motion recognition technology may be used in the above-described embodiments. For example, if a user makes a motion like selecting an object displayed on the screen, or pronounces a voice command corresponding to the object, it is determined that the corresponding object is selected, and a control operation that matches the object may be performed. In this case, it may be set to perform such a control operation not only in the call destination mode but also in the call origination mode.

In addition, although not illustrated in FIG. 16, depending on embodiments, the display device 100 may further include various communication ports such as a USB port to which a USB connector can be connected or an HDMI port, various external input ports for connecting to various external terminals, such a headset, a mouse, and a LAN, and a DMB chip for receiving and processing a DMB (Digital Multimedia Broadcasting) signal.

As described above, the display device 100 may be implemented in various ways.

The voice call method according to various exemplary embodiments as described above may be stored in a non-transitory readable medium. The non-transitory readable medium may be mounted on various devices to be used. As an example, a program code for performing the voice call method, which includes displaying content, connecting communication with a communication terminal, and displaying an inquiry message for selecting whether to accept a call if a call destination mode in which the communication terminal receives a call signal from another communication terminal starts, may be stored and provided in the non-transitory readable medium. As another example, a program code for performing the voice call method, which includes transmitting a first signal for notifying the display device of a call reception state if a call signal is received from another communication terminal, transmitting a second signal for notifying the display device of a call origination state if the call signal is sent to the other communication terminal, relaying a phone call between the other communication terminal and the display device if a first user command to consent to a call is received from the display device, and transmitting a call rejection signal to the other communication terminal if a second user command to reject the call is input from the display device, may be stored and provided in the non-transitory readable medium.

The non-transitory computer readable medium is not a medium that stores data for a short period, such as a register, a cache, or a memory, but means a medium which semi-permanently stores data and is readable by a device. Specifically, the non-transitory computer readable medium may be a CD, a DVD, a hard disc, a Blu-ray disc, a USB, a memory card, or a ROM.

Various components of the display device 100, communication terminal 200, and other communication terminal 300 have been described. However, such described components should not be construed as limiting. Such components may be, for example, hardware components, software components, or a combination of hardware and software components.

While various exemplary embodiments have been shown and described, it will be understood by those skilled in the art that various changes in form and detail may be made therein without departing from the invention, as defined by the appended claims.

## Claims

1. A display device comprising:
a display configured to display content;
a speaker configured to output sound of the content;
a communicator configured to communicate with a first communication terminal; and
a controller configured to display an inquiry message for selecting whether to accept a call on the display in a call destination mode in which the first communication terminal receives a call signal from a second communication terminal.

2. The display device as claimed in claim 1, wherein the controller is further configured to mute the sound output of the content and to connect to a phone call with the second communication terminal on a condition that a first user command to consent to the call is input according to the inquiry message, and
the controller is further configured to transmit a call rejection signal to the first communication terminal on a condition that a second user command to reject the call is input according to the inquiry message.

3. The display device as claimed in claim 2, wherein the controller is further configured to unmute the sound output of the content on a condition that the phone call is ended.

4. The display device as claimed in any one of claim 1 to 3, wherein the controller is further configured to automatically control a volume level of the sound output of the content from the speaker in a call origination mode in which the first communication terminal originates the call signal.

5. The display device as claimed in any one of claim 1 to 4, wherein the controller is further configured to determine that the call destination mode begins on a condition that a first signal for notifying of a call reception state is received from the first communication terminal, and to determine that a call origination mode begins on a condition that a second signal for notifying of a call origination state is received from the communication terminal.

6. The display device as claimed in claim 5, wherein the controller is further configured to control the display to display a message for inquiring whether to perform a mute function on the display in response to the call origination mode in which the communication terminal originates the call signal beginning, and to turn off the sound output of the content on a condition that the mute function is selected according to the message.

7. The display device as claimed in anyone of claim 1 to 6, wherein the communicator is configured to perform communication with the communication terminal using a Bluetooth method.

8. A communication terminal comprising:
a first communicator configured to perform a phone call with another communication terminal;
a second communicator configured to perform communication with a display device; and
a controller configured to transmit a first signal notifying the display device of a call destination mode on a condition that a call signal is received from the other communication terminal and to transmit a second signal notifying the display device of a call origination mode on a condition that the call signal is sent to the other communication terminal from the communication terminal,
wherein the controller is further configured to relay the phone call between the other communication terminal and the display device on a condition that a first user command to consent to a call is received from the display device, and transmits a call rejection signal to the other communication terminal on a condition that a second user command to reject the call is input from the display device.

9. A call method of a display device comprising:
displaying content;
connecting with a first communication terminal; and
displaying an inquiry message for selecting whether to perform a call in a call destination mode in which the first communication terminal receives a call signal from a second communication terminal.

10. The call method as claimed in claim 9, further comprising:
muting a sound output of the content and connecting to a phone call with the second communication terminal on a condition that a first user command to consent to a call is input according to the inquiry message; and
transmitting a call rejection signal to the first communication terminal on a condition that a second user command to reject the call is input according to the inquiry message.

11. The call method as claimed in claim 10, further comprising unmuting the sound output of the content on a condition that the phone call is ended.

12. The call method as claimed in any one of claim 9 to 11, further comprising automatically controlling a volume level of the output sound of the content in a call origination mode in which the first communication terminal originates the call signal.

13. The call method as claimed in any one of claim 9 to 12, further comprising determining that the call destination mode begins on a condition that a first signal for notifying a call reception state is received from the first communication terminal, and determining that a call origination mode begins on a condition that a second signal for notifying a call origination state is received from the first communication terminal.

14. The call method as claimed in claim 13, further comprising:
displaying a message for inquiring whether to perform a mute function in the call origination mode in which the communication terminal originates the call signal; and
turning off the sound output of the content on a condition that the mute function is selected according to the message.

15. A call method of a communication terminal comprising:
transmitting a first signal for notifying the display device of a call reception state on a condition that a call signal is received from another communication terminal;
transmitting a second signal for notifying the display device of a call origination state on a condition that the call signal is sent to the other communication terminal;
relaying a phone call between the other communication terminal and the display device on a condition that a first user command to consent to a call destination is received from the display device; and
transmitting a call rejection signal to the other communication terminal on a condition that a second user command to reject the call destination is input from the display device.
